Europäisches Patentamt

European Patent Office

Office européen des brevets

(19)

(11) Publication number: **0 012 780**
**B2**

(12) # NEW EUROPEAN PATENT SPECIFICATION

(45) Date of publication of the new patent specification :
22.10.86

(51) Int. Cl.⁴ : **B 60 D  3/00**, A 01 B 59/048

(21) Application number : 78300642.2

(22) Date of filing : 20.11.78

(54) Tractor front implement hitch.

(30) Priority : 21.11.77 US 853783

(43) Date of publication of application :
09.07.80 Bulletin 80/14

(45) Publication of the grant of the patent :
25.05.83 Bulletin 83/21

(45) Mention of the opposition decision :
22.10.86 Bulletin 86/43

(84) Designated contracting states :
BE DE FR GB NL SE

(56) References cited :
AT-B-   322 886
DE-B- 1 124 284
FR-A- 1 015 468
FR-A- 1 213 357
FR-A- 2 074 720
FR-A- 2 152 629
FR-A- 2 245 268
FR-A- 2 259 526
FR-A- 2 285 332
FR-A- 2 311 494
GB-A-   767 210
US-A- 2 698 564
US-A- 2 783 058

(73) Proprietor : MASSEY-FERGUSON SERVICES N.V.
Abraham de Veerstraat 7A
Curaçao Netherlands Antilles (NL)

(72) Inventor : Old, John Leslie
25 Arbour Close
Kenilworth Warwickshire (GB)

(74) Representative : Jones, David Bryn
Patent and Trade Marks Department Massey-Ferguson
Stareton, near Kenilworth Warwickshire CV8 2LJ (GB)

Jouve, 18, rue St-Denis, 75001 Paris, France

EP 0 012 780 B2

## Description

### Technical Field

The present invention relates generally to an implement hitch, and more particularly to an implement hitch for securing an implement forwardly of a propelling tractor.

### Background Art

While implement hitches have been known for a considerable number of years, these hitches have been customarily mounted on the rear of a tractor and the implement secured to the tractor in trailing relationship.

More recently implements have been secured to the front of a tractor by hitches. An example of such a front hitch is shown in AT-B-322 886.

As will be appreciated by those having ordinary skill in the art, a hitch will function in a manner somewhat differently when applied to the front of a tractor than when applied to the rear of a tractor. Thus, the lower links will be in compression and it will be necessary to maintain the implement substantially directly in front of the tractor. This has been accomplished by stabilizing the lower links. The links may be stabilized in such a manner that some side to side away or horizontal float is permitted within set limits. Alternatively, all side to side sway may be eliminated. This will depend upon the type of implement supported by the hitch. As a general rule, those implements which engage the ground are permitted to sway within set limits while those implements which do not engage the ground are not permitted to sway.

One manner in which the lower links of front mounted hitches have been stabilized in the past has been to extend a strut from the rear end of one lower link to the forward end of the other lower link. Alternatively, stabilizer chains have been employed. While such devices have performed their intended function in a generally satisfactory manner, it is necessary to provide these devices with adjustment provisions to accommodate the different types of implements referred to in the preceding paragraph. In addition, as the distance between the hitch pins varies from one category of implement to another category of implement, large variations in the length of the struts and stabilizer chains must be provided for in order to accommodate the varying implements. It should be appreciated that such adjustments in length of stabilizer chains and strut may not be easily accomplished. In addition, it may be necessary to disconnect such devices when mounting or removing an implement from the hitch. Furthermore, such devices may interfere with any tractor power takeoff shaft employed to drive an implement mounted on the front hitch.

### Disclosure of Invention

It is one object of the present invention to provide a front implement hitch having improved means for stabilizing its lower links thus overcoming the disadvantages of the prior art stabilizing means discussed above.

According to one aspect of the present invention there is provided a front hitch for mounting, the hitch including a pair of laterally spaced apart lower links arranged to extend forwardly of the tractor when in use, the forward ends of the lower links being provided with attachment means for the implement and being movable vertically and swingable from side to side, and a pair of laterally spaced apart mounting means associated with the tractor for mounting the rear ends of the lower links, said hitch being characterized in that at least one of the mounting means includes adjustment means which enables the lateral spacing between the rear ends of the lower links to be adjusted in a stepless manner, and in that a pair of vertical rubbing surfaces are provided on the hitch for abutment with an intermediate portion of the lower links so that the amount of permitted side to side sway of the lower links can be accurately adjusted to enable side to side sway to be eliminated if desired for a range of implements of different sizes.

It will be appreciated that by adjusting the lateral spacing between the rear ends of the lower links the amount of sway which the rubbing surfaces permit can be easily adjusted and sway can be eliminated if desired by making this lateral spacing sufficiently small. The hitch construction described in the preceding paragraph thus includes an improved means for stabilising the lower links which overcomes the disadvantages described above. The above adjustment feature also enables implements of different categories to be accommodated by the hitch.

In a preferred construction at least one of the lower links includes an apertured mounting ball at the rear end and the associated adjustment means includes a laterally shiftable pin which receives the mounting ball.

Preferably the adjustment means includes a rotatable threaded member parallel to the laterally shiftable pin, said threaded member passing through a threaded aperture within the support frame with an interconnecting member interconnecting said pin with the threaded member to affect movement of said pin when said threaded member is rotated relative to the threaded aperture.

Preferably each mounting means includes adjustment means so that each of the lower links can be independently adjusted.

This invention also provides a front implement hitch for attachment to the front portion of a tractor, said hitch including a generally U-shaped support frame for embracing the front and sides of said front portion, a pair of lower implement support links and at least one upper implement support link, all the links being supported from the frame and extending forwardly thereof for generally vertical pivotal movement relative thereto, implement attachment means at the forward ends of all the links, lifting means supported from the frame for pivoting said lower links relative thereto and a plurality of support means on the support frame for engagement with complementary support means on the front portion of the tractor, said hitch being characterized in that the support means comprise a plurality of projections or apertured mounting plates on the support frame which are arranged to inter-engage corresponding apertured mounting plates or projections on the tractor, the projections being arranged to extend generally longitudinally of the hitch and the apertured plates generally transversely thereto so that the projections and apertures can be engaged by forward motion of the tractor relative to the hitch, locking means being provided to retain the projections and apertures in engagement during the use of the hitch, the lower links being supported at their rear ends from the frame with limited sway by laterally spaced mounting means, at least one of the mounting means including adjustment means for adjusting the lateral spacing between the rear ends of the lower links in a stepless manner, and a pair of generally vertical rubbing surfaces being provided for abutment with an intermediate portion of the lower links so that the amount of permitted side to side sway of the lower links can be accurately adjusted to enable side to side sway to be eliminated if desired for a range of implements of different sizes.

As will be appreciated a hitch in accordance with the preceding paragraph can be readily attached to and removed from the tractor.

A stand is preferably provided to assist in positioning the projections and apertured plates at the correct relative height for inter-engagement and guidance means are provided to position the projections and apertured plates for automatic drive-in engagement.

Brief Description of the Drawings

One embodiment of the present invention will now be described by way of example only with reference to the accompanying drawings in which :

Figure 1 is a side elevational view of a portion of a tractor on which the front implement hitch of the present invention has been mounted ;

Figure 2 is a plan view of a portion of the front implement hitch associated with an implement, but not with a tractor ;

Figure 3 is a front sectional view taken generally along the line 3-3 of Figure 2 ;

Figure 4 is a front sectional view taken generally along the lines 4-4 in Figure 2 ; and

Figure 5 is a sectional view taken along the lines 5-5 in Figure 1.

Best Mode of Carrying Out Invention

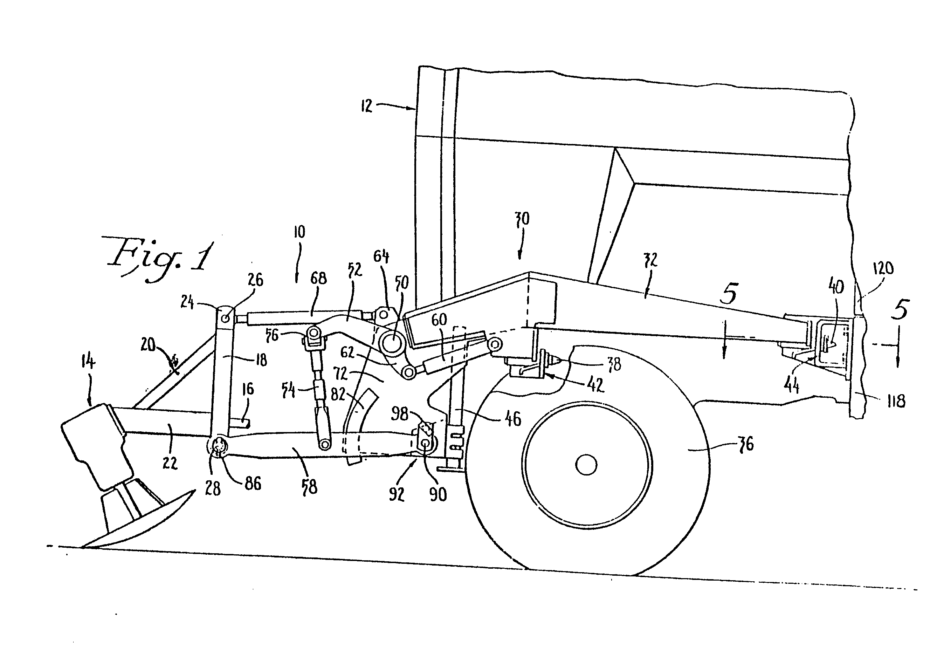

Referring now to Figure 1, the front implement hitch is indicated generally at 10. It is illustrated mounted on the front portion of a tractor 12, the hitch carrying an implement indicated generally at 14. While a beet topper is shown in Figure 1 (which beet topper would be driven from a PTO shaft 16), various other implements may be mounted forwardly of a tractor. Such implements include mowers, rakes, tedders, cultivators, etc. These implements would be of a type which are adapted to be secured to a three-point hitch and thus, would be provided with a mast 18 and a strut 20, one end of which is supported on the implement frame 22. The mast 18 will be provided with a pair of spaced apart ears 24 which receive a transversely extending pin 26. The implement will also be provided with a crossbar terminating at either end in transversely extending spaced apart hitch pins 28.

The farm equipment industry has adopted various standard sized of three-point hitch implements in which the spacing between the hitch pins will vary as well as various other features. It is a feature of this invention to provide a tractor implement hitch which can be secured to differing category implements having differing spacings between the transversely extending hitch pins.

The tractor implement hitch 10 of the invention includes a generally U-shaped support frame indicated at 30. As can best be seen from Figures 1 and 2 the support frame includes spaced apart generally parallel longitudinally extending left and right hand legs 32, 34, which legs are adapted to be disposed on opposite sides of the front portion of tractor 12, such legs extending over the axle for the forward wheels 36. Each of the legs, which are formed of box beam section, is provided with front and rear quick-attach bayonet mounting pins 38, 40 which extend generally longitudinal of the hitch and are adapted to be secured to complementary mounting portions 42, 44 of the tractor. A stand 46 (shown in Figure 1 in its raised in-operative position) is carried by each of the legs 32, 34. The stands are provided to facilitate the mounting of the frame. The mounting of the frame will be discussed in greater detail below.

In addition to the spaced apart legs 32, 34 the frame 30 is provided with a transverse member in the form of a hollow tube 48, the hollow tube being welded or otherweise rigidly secured to the forward ends of the pair of legs 32, 34. A rock shaft 50 extends through the hollow tube 48, the rock shaft being provided with lift arms 52 at either end. The upper ends of a pair of vertically adjustable lift links 54 are connected to the pair of lift arms 52 by universal joint connections indicated generally at 56. The lower end of each of the lift links 54 is secured to an intermediate portion of an associated lower link 58.

An extensible and retractable force applying means in the form of a hydraulic cylinder assembly 60 has its anchor end pivotally secured to one portion of the frame, and its rod end secured to an extension 62 of one of the lift arms 52. It should be obvious that if the cylinder were extended both lift arms 52 would be raised, which in turn acting through the lift links 54 would cause the lower links 58 to be raised.

Mounted upon an intermediate portion of the hollow tube 48 is a pair of upwardly extending ears 64 which receive a transversely extending pin 66. An upper link 68 is provided with front and rear apertured balls 69, 70.

The upper link 68 is mounted with the pin 26 passing through the forward ball 69 and the pin 66 passing through the rear ball 70.

The frame 30 further includes generally parallel spaced apart members or plates 72 each of which is secured to a forward portion of one of the legs 32, 34 and also to the hollow tube 48 by reinforcing plates 74. The lower rear portion of each of the plates 72 is bent into a U-shape having an outer portion 76, an inner portion 78, and a bight portion 80 (Figure 4). A reinforcing portion 81 is secured to the inner surface of the outer portion 76. The outer surface of each plate supports a rub block 82 which is engageable by an intermediate portion of an associated lower link 58 to limit its sway. Each of the rub blocks or spaced apart devices 82 is disposed between the lift links 54 and the rear end of the lower link 58.

Each of the links 58 is provided with apertured balls rotatably mounted on its front and rear ends. The forward ball 84 is adapted to be positioned over one of the hitch pins 28 and secured in place by a lynchpin 86. The rear ball 88 is mounted on a laterally shiftable pin 90, there being one pin 90 for each of the lower links 58, and each of the pins 90 forming part of one of a pair of spaced apart adjustable mounting means indicated generally at 92. The pin 90 is an extension of a round bar 94 which passes through transversely aligned apertures in the inner and outer portions 76, 78 of the U-shaped portion of the plate 72 as well as the reinforcing portion 81. The outer portion 76 and reinforcing portion 81 are also provided with aligned threaded apertures which receive a threaded member in the form of a bolt 96, the bolt being parallel to the pin 90 and bar 94. In the embodiment illustrated, a handle 98 has been welded to the head 100 of the bold 96. An intermediate member in the form of a strap 102 interconnects the bolt 96 with the pin 90. Thus, one end of the strap 102 is journalled about the bolt 96 but is restrained from outward movement relative thereto by the bolt head 100. The other end of the strap 102 is secured to the outer end of the pin 90 by a roll or pin 104 of comparable securing means. As can be seen from Figure 4, a shoulder is formed between the pin 90 and bar 94. One side of the ball 88 is disposed adjacent to this shoulder and the other side of the ball 88 is disposed adjacent one side of the strap 102. Thus the ball 88 cannot move relative to the pin 90. As will be obvious from the construction illustrated in Figure 4 as the handle 98 is rotated in a clockwise direction the strap 102 will be forced toward the portion 76 causing the pin 90 and ball 88 to be shifted inwardly. Alternatively, if the handle 98 is rotated in a counterclockwise direction, the strap 102 will be permitted to shift outwardly along with the ball 88.

When the parts are assembled in the manner illustrated in the various figures, it should be apparent that as the handle 98 is rotated to move the pin 90 towards the centre that an intermediate portion of the lower link 58 will be caused to bear against the rub block 82 as outward movement of the forward ball 84 is constrained from such movement by the lynchpin 86. Thus, by adjusting the right and left spaced apart adjusting means towards each other the implement 14 mounted upon the tractor implement hitch of this invention may be secured in such a manner that all side to side sway is eliminated. Alternatively small or controlled amounts of side to side sway may be permitted. Furthermore, as the forward ends of the lower links can be moved outwardly without affecting the disposition of the adjustable mounting means 92, implements can be readily mounted on the hitch.

To remove the implement from a tractor it is necessary to lower the stands 46 until they engage the ground. The hydraulic lines (not shown) to the cylinder assembly 60 are disconnected and the lynchpins 109 used to secure the bayonet mounting pins to the mounting portions are removed. The tractor and hitch are then separated by either levering the unit off the tractor, or by backing off the tractor. As the stands are located near the balance point of the hitch, the hitch 10 can easily be parked tilted on the stands 46 and lower links 58. The procedure for attachment is essentially the opposite of detachment. Thus, the tractor is driven between the arms 22, 34 so that the bayonet pins pass through apertures in transverse portion 108 and reinforcing number 106 until the collars 110 about the pins 38 or 40 abut the forward surface of the transverse portion 108 of the mounting portions. The bayonet pins are guided into these apertures by lower and side guide plates 112, 114 which engage a portion of the leg 32, 34 adjacent the corresponding bayonet pin, the stands 46 assisting in positioning the pins 38, 40 at the correct height for engagement in the apertures. Once the collars 110 are in proper engagement, the bayonets are secured in place by the lynchpins 109, it being customary to employ one lynchpin on each side of the tractor.

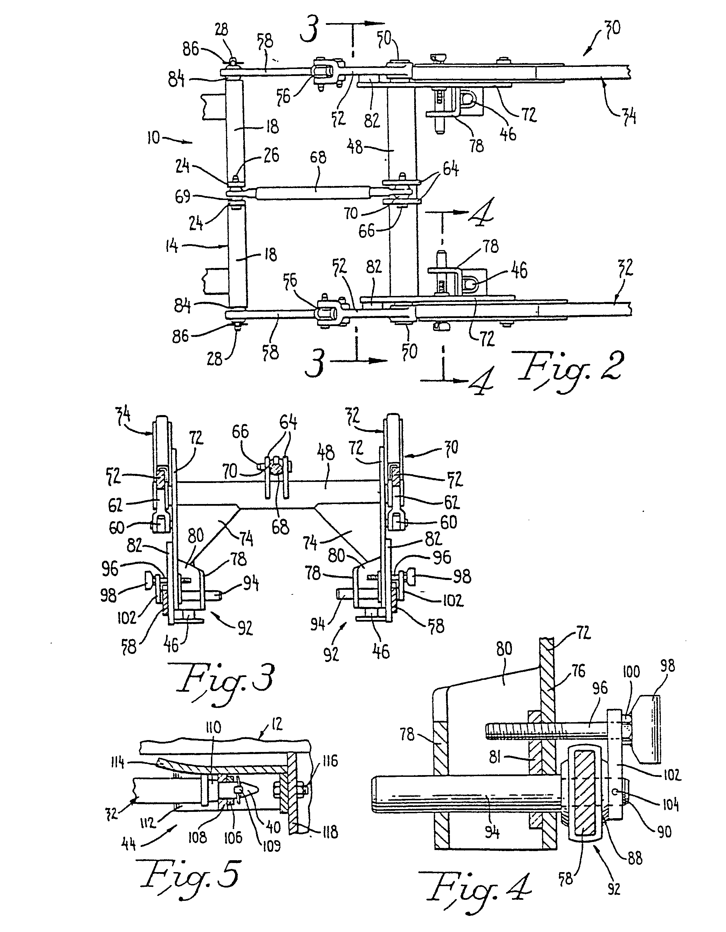

While only the left rear mounting portion is shown in Figure 5, it should be obvious that the right rear portion is essentially the same with the side guide 114 disposed between the leg 34 and the tractor 12. The rear mounting portions are secured by nut and bolt assemblies 116 to that portion of the tractor frame 118 which supports the forward portion of the cab 120. The forward mounting portions 42 correspond generally to the rear portions 44 and are secured to the tractor 12 in a manner not illustrated.

It is not necessary to remove an implement from the hitch before the hitch is removed. Thus, the tractor implement hitch could be parked on the implement and stands, and the top link could be used to adjust the height of the rear mounting pins.

As will be appreciated, since the quick-attach bayonet pins 38, 40 form the sole support for the hitch on the tractor the hitch can be readily attached to and removed from the tractor by the simple drive-in or drive-out procedure described above and the inseption or removal of the lynchpins 109.

It will be clear that a number of modifications can be made to the construction described above without departing from the scope of the present invention. For exemple, the hitch could employ four links, two lower links and two upper links, instead of the three link arrangement described above.

Also, in the three link arrangement described above only one of the lower links may be adjustably mounted on the frame. Such a construction, although probably less desirable, would still enable the lateral spacing between the rear ends of the lower links to be adjusted.

## Claims

1. A front implement hitch (10) for mounting an implement (14) forwardly of a tractor (12), the hitch including a pair of laterally spaced apart lower links (58) arranged to extend forwardly of the tractor when in use, the forward ends of the lower links being provided with attachment means for the implement and being movable vertically and swingable from side to side, and a pair of laterally spaced apart mounting means (92) associated with the tractor for mounting the rear ends of the lower links, said hitch being characterised in that at least one of the mounting means includes adjustment means (90, 94, 96, 102) which enables the lateral spacing between the rear ends of the lower links to be adjusted in a stepless manner, and in that a pair of vertical rubbing surfaces (82) are provided on the hitch for abutment with an intermediate portion of the lower links so that the amount of permitted side to side sway of the lower links can be accurately adjusted to enable side to side sway to be eliminated if desired for a range of implements of different sizes.

2. A front hitch according to claim 1 further characterised by the provision of a U-shaped support frame (30) including a pair of spaced apart generally parallel legs (32, 34) adapted to be disposed on either side of the tractor (12) and secured thereto, and a transverse member (48) adapted to be disposed forwardly of the tractor when said pair of legs are secured to the tractor, said transverse member being interconnected with the forward ends of said pair of legs, and said mounting means (92) and said rubbing surfaces (82) being carried from said support frame (30).

3. A front hitch according to claim 2 further characterized in that said transverse member (48) is a hollow member, said hitch (10) further including a rockshaft (50) passing through the hollow member (48), a pair of lift arms (52) secured to the ends of the rockshaft (50), a pair of lift links (54) extending from the pair of lift arms (52) to the lower links (58), each of the lift links (54) being secured to an associated lower link (58) at a location forwardly of the spaced apart mounting means (92).

4. A front hitch according to claim 3 further characterised in the provision of extensible and retractable force applying means (60) extending between one of the pair of legs (32) and one of the lift arms (52, 62) and operable upon extension to cause said lower links (58) to be raised.

5. A front hitch according to claim 3 or 4 further characterised in that a pair of spaced apart ears (64) are secured to the hollow member (48) midway between its ends, and also in that an upper link (68) is secured between the spaced apart ears (64).

6. A front hitch according to any preceding claims further characterised in that said support frame (30) includes a pair of generally parallel members (72) disposed between the lower links (58) and in that the vertical rubbing surfaces (82) are rub blocks, there being one rub block (82) mounted on each of the parallel members (72) in such a position that it may be contacted by an intermediate portion of an associated lower link (58).

7. A front hitch according to any preceding claim further characterised in that at least one of the lower links (58) includes an apertured mounting ball (88) at its rear end, and in that the associated adjustment means (90, 94, 96) includes a laterally shiftable pin (90, 94) which receives the mounting ball.

8. A front hitch according to claim 7 when dependent on claim 2 further characterised in that the adjustment means (90, 94, 96) includes a rotatable threaded member (96) mounted parallel to the laterally shiftable pin (90, 94), said threaded member passing through a threaded aperture within the support frame (30, 72), and in that an interconnecting member (102) interconnects said pin (90, 94) with the threaded member (96) to affect movement of said pin (90, 94) when said threaded member (102) is rotated relative to the threaded aperture.

9. A front hitch according to claim 8 further characterised in that the rear end of each lower link (58) is provided with an apertured mounting ball (88) and a threaded member (96), and a laterally shiftable pin (90, 94) is associated with each apertured mounting ball whereby each of the lower links can be independently adjusted.

10. A front hitch according to any one of claims 2 to 9 further characterised in that the support frame (30) is provided with quick-attach formations in the form of projections (38, 40) or apertured plates (42, 44) for engagement with complementary apertured plates or projections on the tractor to serve as the sole support for the frame on the tractor, the projections being arranged to extend generally longitudinally of the hitch and the apertured plates generally transversely thereto so that the projections and apertures can be engaged by forward motion of the tractor relative to the hitch.

11. A front implement hitch for attachment to the front portion of a tractor (12), said hitch including a generally U-shaped support frame (30, 32, 48, 34) for embracing the front and sides of said front position, a pair of lower implement support links (58) and at least one upper implement support links (68), all the links being supported from the frame and extending forwardly thereof for generally vertical pivotal movement relative thereto, implement attachment means (84) at the forward ends of all the links, lifting means (50, 52, 54, 60, 62) supported from the frame for pivoting said lower links (58) relative thereto and a plurality of support means (38, 40) on the support frame (30) for engagement with complimentary support means (42, 44) on the front portion of the tractor (12), said hitch being characterised in that the support comprise a plurality of projections (38, 40) or apertured mounting plates (42, 44) on the support frame (30) which are arranged to inter-engage corresponding apertured mounting plates or projections on the tractor (12), the projections being arranged to extend generally longitudinally of the hitch and the apertured plates (42, 44) generally transversely thereto so that the projections and apertures can be engaged by forward motion of the tractor relative to the hitch, locking means (109) being provided to retain the projections (38, 40) and apertures in engagement during use of the hitch, the lower links (58) being supported at their rear ends from the frame (30, 32, 34, 48) with limited sway by laterally spaced mounting means (92), at least one of the mounting means including adjustment means (90, 94, 96, 102) for adjusting the lateral spacing between the rear ends of the lower links in a stepless manner, and a pair of generally vertical rubbing surfaces (82) being provided for abutment with an intermediate portion of the lower links so that the amount of permitted side to side sway ot the lower links can be accurately adjusted to enable side to side sway to be eliminated if desired for a range of implements of different sizes.

12. A front hitch according to claim 10 or 11, further characterised in that a stand (46) is provided for assisting in positioning the projections (38, 40) and apertured plates (42, 44) at the correct relative height for inter-engagement and in that guidance means (112, 114) are provided to position the projections and apertured plates for automatic drive-in engagement.

**Patentansprüche**

1. Frontanbauvorrichtung (10) für die Montage eines Gerätes (14) vorne an einer Zugmaschine (12), bestehend aus einem Paar seitlich im Abstand voneinander angeordneten unteren Verbindungsgliedern (58), die so angeordnet sind, dass sie im Einsatz nach vorne ausgefahren sind, wobei die Vorderenden der unteren Verbindungsglieder mit Befestigungsmitteln für das Gerät ausgestattet und lotrecht und seitlich schwenkbar angeordnet sind, und einem Paar seitlich im Abstand voneinander angeordneten, zur Zugmaschine gehörenden Befestigungsmitteln (92) zur Befestigung der Hinterenden der unteren Verbindungsglieder, dadurch gekennzeichnet, dass wenigstens eines der Befestigungsmittel Justiervorrichtungen (90, 94, 96, 102) für die stufenlose Justierung des seitlichen Abstandes zwischen den hinteren Enden der unteren Verbindungsglieder besitzt und dass ein Paar lotrechter Reibflächen (82) an der Anbauvorrichtung als Anschlag für das Zwischenstück der unteren Verbindungsglieder vorgesehen sind, so dass das Ausmass der zulässigen seitlichen Schwenkbewegung der unteren Verbindungsglieder genau einstellbar ist, um seitliche Schwenkbewegungen auszuschliessen, wenn dies bei einer Reihe von Geräten unterschiedlicher Grösse erwünscht ist.

2. Frontanbauvorrichtung nach Anspruch 1, weiter gekennzeichnet durch das Vorhandensein eines U-förmigen Stützrahmens (30) einschliesslich eines Paares von im Abstand voneinander angeordneten, im wesentlichen parallel zueinander verlaufenden Beinen (32, 34), die so ausgebildet sind, dass sie sich auf den beiden Seiten der Zugmaschine (12) anordnen und an ihr befestigen lassen, sowie durch ein quer verlaufendes Verbindungsglied (48), das so ausgelegt ist, dass es sich vorne an der Zugmaschine anordnen lässt, wenn besagte Beine an der Zugmaschine befestigt sind, wobei besagtes querverlaufendes Verbindungsglied mit den Vorderenden des besagten Beinepaares in Verbindung steht und besagte Befestigungsmittel (92) und die besagten Reibflächen (82) an dem besagten Stützrahmen abgestützt sind.

3. Frontanbauvorrichtung nach Anspruch 2, dadurch gekennzeichnet, dass besagtes Querglied (48) als Hohlteil ausgebildet ist, wobei besagte Anbauvorrichtung (10) auch eine Schwingwelle (50) aufweist, die sich durch das Hohlglied (48) erstreckt, sowie ein Paar Hebearme (52), die am Ende der Schwingwelle (50) montiert sind, und ein Paar Hebeglieder (54), die sich von dem Hebearmpaar (52) bis zu den unteren Verbindungsgliedern (58) erstrecken, wobei jedes der Hebeglieder (54) an einem zugehörigen unteren Verbindungsglied (58) vor den im Abstand angeordneten Befestigungsmitteln (92) befestigt ist.

4. Frontanbauvorrichtung nach Anspruch 3, weiter gekennzeichnet durch das Vorhandensein eines aus- und einfahrbaren Kraftbeaufschlagungsmittels (60), das sich zwischen einem Bein des Beinepaares (32) und einem der Hebearme (52, 62) erstreckt und beim Ausfahren so bedient werden kann, dass die besagten unteren Verbindungsglieder (58) gehoben werden.

5. Frontanbauvorrichtung nach Anspruch 3 oder 4, weiter gekennzeichnet dadurch, dass ein Paar im Abstand voneinander angeordnete Backen (64) an dem Hohlglied (48) mittig zwischen dessen Enden angeordnet sind, und dass ein oberes Verbindungsglied (68) zwischen den im Abstand voneinander angeordneten Backen (64) befestigt ist.

6. Frontanbauvorrichtung gemäss einem der obigen Ansprüche, weiter dadurch gekennzeichnet, dass besagter Stützrahmen (30) ein Paar im wesentlichen parallel zueinander verlaufende Träger (72) aufweist, die zwischen den unteren Verbindungsgliedern (58) angeordnet sind und dass die lotrechten Reibflächen (82) Reibklötze sind, wobei jeweils ein Reibklotz (82) auf jedem der parallel zueinander verlaufenden Träger in einer solchen Lage montiert ist, dass er von einem Zwischenteil eines zugehörigen unteren Verbindungsgliedes berührt werden kann.

7. Frontanbauvorrichtung gemäss einem der obigen Ansprüche, weiter dadurch gekennzeichnet, dass wenigstens eines der unteren Verbindungsglieder (58) an seinem hinteren Ende eine mit Öffnungen versehene Lagerkugel (88) aufweist und dass die zugehörigen Justiermittel (90, 94, 96) einen in Querrichtung verstellbaren Zapfen (90, 94) mit einschliessen, der die Lagerkugel aufnimmt.

8. Frontanbauvorrichtung nach Anspruch 7 in Abhängigkeit von Anspruch 2 dadurch weiter gekennzeichnet, dass die Justiermittel (90, 94, 96) ein drehbares Gewindeteil (96) aufweisen, das parallel zu dem in Querrichtung verstellbaren Zapfen (90, 94) verläuft, wobei besagtes Gewindeteil durch eine Gewindeöffnung im Stützrahmen (30, 72) reicht und dass ein Verbindungsglied (102) besagten Zapfen (90, 94) so mit dem Gewindeteil (96) verbindet, dass eine Bewegung des besagten Zapfens (90, 94) verursacht wird, wenn besagtes Gewindeteil (102) relativ zu der Gewindeöffnung gedreht wird.

9. Frontanbauvorrichtung nach Anspruch 8, dadurch weiter gekennzeichnet, dass an dem rückwärtigen Ende eines jeden unteren Verbindungsgliedes (58) eine mit Öffnungen versehene Lagerkugel (88) und ein Gewindeteil (96) angeordnet ist, und dass ein in Querrichtung verstellbarer Zapfen (90, 94) zu jeder mit Öffnungen versehenen Lagerkugel zugehörig ist, wodurch jedes der unteren Verbindungsglieder unabhängig justierbar ist.

10. Frontanbauvorrichtung gemäss einem der Ansprüche 2 bis 9, dadurch weiter gekennzeichnet, dass der Stützrahmen (30) mit Schnellmontageansätzen in Form von Vorsprüngen (38, 40) oder Platten mit Öffnungen (42, 44) ausgestattet ist, die in passende Platten mit Öffnungen oder Vorsprünge an der Zugsmaschine eingreifen und als einzige Abstützung des Stützrahmens an der Zugmaschine dienen, wobei die Vorsprünge so angeordnet sind, dass sie im wesentlichen längs zur Anbauvorrichtung verlaufen, während die Platten mit Öffnungen im wesentlichen quer zu ihnen so verlaufen, dass die Vorsprünge und Öffnungen durch Vorwärtsbewegung der Zugmaschine relativ zur Anbauvorrichtung miteinander in Eingriff gebracht werden können.

11. Frontanbauvorrichtung für die Montage am Vorderende einer Zugmaschine (12), wobei besagte Anbauvorrichtung einen im wesentlichen U-förmigen Stützrahmen (30, 32, 48, 34) mit einschliesst, der das Vorderende und die Seiten des besagten Vorderteils umgreift, sowie ein Paar untere Geräte-Stützglieder (58) und wenigstens ein oberes Geräte-Stützglied (68), wobei alle diese Glieder am Stützrahmen abgestützt sind und sich von diesem zur Erzielung einer im wesentlichen lotrecht verlaufenden Kippbewegung gegenüber dem besagten Stützrahmen nach vorne erstrecken Mittel (84) zum Anbringen von Geräten an den Vorderenden sämtliche Verbindungsglieder, Hebemittel (50, 52, 54, 60, 62), die am Stützrahmen abgestützt sind, um die besagten unteren Verbindungsglieder (58) relativ zu ihm abzukippen, sowie eine Vielzahl von Stützmitteln (38, 40) am Stützrahmen (30) für den Eingriff in passende Stützmittel (42, 44) vorne an der Zugmaschine (12), dadurch gekennzeichnet, dass bei besagter Frontanbauvorrichtung die Stützmittel aus einer Vielzahl von Vorsprüngen (38, 40) oder am Rahmen (30) angebrachten, mit Öffnungen versehenen Stützplatten (42, 44) bestehen, die so angeordnet sind, dass sie in entsprechende passende Montageplatten oder Vorsprünge an der Zugsmaschine (12) eingreifen, wobei diese Vorsprünge so angeordnet sind, dass sie im wesentlichen in Längsrichtung zur Frontanbauvorrichtung verlaufen, während die mit Öffnungen versehenen Platten (42, 44) im wesentlichen quer verlaufen, so dass die Vorsprünge und Öffnungen durch Vorwärtsfahren der Zugmaschine relativ zur Anbauvorrichtung miteinander in Eingriff gebracht werden können und wobei Verriegelungsmittel (109) auf solche Art und Weise angebracht sind, dass die Vorsprünge und Öffnungen während der Benutzung der Anbauvorrichtung in Eingriff behalten werden, indem die unteren Verbindungsglieder (58) an ihren rückwärtigen Enden am Rahmen (30, 32, 34, 48) abgestützt sind und sich durch die seitlich im Abstand angeordneten Montagevorrichtungen (92) nur beschränkt bewegen können, und wenigstens eine der besagten Montagevorrichtungen (92) mit Justiermitteln (90, 94, 96, 102) ausgestattet ist, mit denen der Querabstand zwischen den hinteren Enden der unteren Verbindungsglieder stufenlos eingestellt werden kann, und durch ein Paar im wesentlichen lotrecht verlaufenden Reibflächen (82) als Stossfläche für einen Mittelteil der unteren Verbindungsglieder vorgesehen sind, so dass das Ausmass der zulässigen seitlichen Schwenkbewegung der unteren Verbindungsglieder genau einstellbar ist, um seitliche Schwenkbewegungen auszuschliessen, wenn dies bei einer Reihe von Geräten unterschiedlicher Grösse erwünscht ist.

12. Frontanbauvorrichtung nach Anspruch 10 oder 11, dadurch weiter gekennzeichnet, dass ein Ständer (46) für die Erleichterung der Einstellung der Vorsprünge (38, 40) und der mit Öffnungen versehenen Platten (42, 44) in der korrekten relativen Höhe vorgesehen ist und dass Führungsmittel (112, 114) vorgesehen sind, um die Vorsprünge und mit Öffnungen versehenen Platten durch Anfahren der Zugmaschine automatisch miteinander in Eingriff zu bringen.

## Revendications

1. Accouplement d'attelage AV (10) d'accessoire pour monter un accessoire (14) à l'AV d'un tracteur (12), l'accouplement comportant une paire de raccords inférieurs (58) écartés de manière à sortir à l'AV du tracteur en service, l'extrémité AV des raccords inférieurs étant munie de moyens d'attelage d'accessoire et admettant une course verticale ainsi que le pivotement d'un côté à l'autre, et une paire de moyens de pose (92) également écartés associés avec le tracteur pour monter les extrémités AR des raccords inférieurs, ledit attelage étant caractérisé en ce qu'un des moyens de pose (92) au moins comporte des facilités de réglage (90, 94, 96, 102) qui permettent le réglage continu de l'écartement latéral des extrémités AR de raccords inférieurs, et en ce qu'une paire de surfaces verticales de friction (82) sont prévues sur l'attelage pour venir en butée avec une tranche intermédiaire des raccords inférieurs de sorte que la quantité de balancement latéral permis pour les raccords inférieurs puisse être ajustée de façon précise pour permettre d'éliminer le balancement latéral si cela est souhaité pour une variété d'accessoires de tailles différentes.

2. Accouplement d'attelage AV selon la revendication 1, caractérisé en outre par un bâti de support en U (30) comportant une paire d'éléments écartés et généralement parallèles (32, 34) adaptés pour l'aménagement et la fixation de chaque côté du tracteur (12) et un élément transversal (48) agencé pour la pose à l'AV du tracteur lorsque la paire d'éléments est fixée au tracteur, ledit élément transversal étant raccordé avec les extrémités AV de ladite paire d'éléments, lesdits moyens de pose (92) et lesdites surfaces de friction (82) étant portés par ledit bâti de support (30).

3. Accouplement d'attelage AV selon la revendication 2, également caractérisé en ce que ledit élément transversal (48) est un élément creux, ledit attelage (10) comportant également un essieu balancier (50) passant par l'élément creux (48), une paire de bras de levage (52) fixée aux extrémités du balancier (50), une paire de raccords de levage (54) étant agencée en prolongation de la paire de bras de levage (52) sur les raccords inférieurs (58), chacun des raccords de levage (54) étant fixé à un raccord inférieur associé (58) en un point situé à l'AV des moyens de pose écartés (92).

4. Accouplement d'attelage AV selon la revendication 3, également caractérisé par des moyens à course d'extension et de retour d'application de force (60) avancés entre un seul de la paire d'éléments (32) et un des éléments de levage (52, 62) et dont la fonction en avancement est de provoquer le levage desdits raccords inférieurs (58).

5. Accouplement d'attelage AV selon la revendication 3 ou 4, également caractérisé en ce qu'une paire d'oreilles écartées (64) est fixée à l'élément creux (48) à mi-chemin entre ses extrémités, et en ce qu'un raccord supérieur (68) est fixé entre les oreilles écartées (64).

6. Accouplement d'attelage AV selon l'une quelconque des revendications précédentes, caractérisé en ce que ledit bâti de support (30) comporte une paire d'éléments essentiellement parallèles (72) disposés entre les raccords inférieurs (58) et en ce que les surfaces verticales de friction (82) sont des blocs de friction, dont un bloc de friction (82) est monté sur chacun des éléments parallèles (72) de telle manière à permettre le contact éventuel avec une tranche intermédiaire d'un raccord inférieur associé (58).

7. Accouplement d'attelage AV selon l'une quelconque des revendications précédentes, caractérisé en ce qu'un des raccords inférieurs (58) au moins comporte une boule de pose à ouverture (88) située à l'extrémité AR et en ce que les moyens associés de réglage (90, 94, 96) comportent un axe admettant le déplacement latéral (90, 94) recevant la boule de pose.

8. Accouplement d'attelage AV selon la revendication 7, sous réserve de la revendication 3, également caractérisé en ce que les moyens de réglage (90, 94, 96) comportent un élément fileté rotatif (96) monté parallèle à l'axe de déplacement latéral (90, 94), ledit élément fileté passant par une ouverture filetée dans le bâti de support (30, 72) et en ce qu'un élément de raccord (102) assure le raccord dudit axe (90, 94) avec l'élément fileté (96) afin d'influencer le mouvement dudit axe (90, 94) lors de la rotation dudit élément (102) par rapport à l'ouverture filetée.

9. Accouplement d'attelage AV selon la revendication 8, également caractérisé en ce que l'extrémité AR de chaque raccord inférieur (58) comporte une boule à ouverture de montage (88) et un élément fileté (96) et un axe à déplacement latéral (90, 94) associé avec chaque boule à ouverture de montage, permettant le réglage indépendant de chacun des raccords inférieurs.

10. Accouplement d'attelage AV selon l'une des revendications 2 à 9, également caractérisé en ce que le bâti de support (30) comporte des formes d'attelage rapide assurées par des éléments en saillie (38, 40) ou plaques à ouverture (42, 44) permettant l'engrènement avec des plaques à ouverture ou éléments en saillie complémentaires sur le tracteur servant de support unique du bâti sur le tracteur, les éléments en saillie étant disposés pour avancer essentiellement dans le sens longitudinal de l'attelage et les plaques à ouverture étant disposées dans le sens transversal, de manière que les éléments en saillie et les ouvertures admettent l'engrènement par le mouvement en AV du tracteur par rapport à l'attelage.

11. Accouplement d'attelage AV d'accessoire à l'AV d'un tracteur (12), ledit attelage comportant un bâti de support essentiellement en U (30, 32, 48, 34) pour entourer les côtés et le front de ladite tranche AV, une paire de raccords inférieurs de support d'accessoire (58) et au moins un raccord supérieur de support d'accessoire (68), tous les raccords étant supportés depuis le bâti et avancés relativement en AV pour permettre le mouvement essentiellement vertical de pivotement en relation, les moyens d'attelage d'accessoire (84) aux extrémités AV de tous les raccords, des moyens de levage (50, 52, 54, 60, 62) supportés à partir du bâti pour pivoter lesdits raccords inférieurs (58) en relation et plusieurs moyens de support (38, 40) sur le bâti de support (30) permettant l'engrènement avec des moyens complémentaires de support (42, 44) sur le plan AV du tracteur (12), ledit attelage étant caractérisé en ce que les moyens de support comportent plusieurs éléments en saillie (38, 40) ou des plaques de pose à ouverture (42, 44) sur le bâti (30), disposés pour le raccord et l'engrènement avec des plaques de pose à ouverture ou éléments en saillie de forme correspondante sur le tracteur (12), les éléments en saillie étant disposés de manière à s'avancer essentiellement dans le sens longitudinal de l'attelage et les plaques à ouverture (42, 44) essentiellement dans le sens transversal de manière à permettre l'engrènement des éléments en saillie et des ouvertures par un mouvement en avant du tracteur par rapport à l'attelage, des moyens de blocage (109) étant prévus pour retenir les éléments en saillie (38, 40) et les ouvertures engagées lors de la mise en œuvre de l'attelage, les raccords inférieurs (58) étant supportés aux extrémités AR depuis le bâti (30, 32, 34, 38) avec un balancement limité par des moyens de pose écartés (92), un des éléments de pose au moins comportant des facilités de réglage (90, 94, 96, 102) pour ajuster l'écart entre les extrémités AR de raccords inférieurs de façon continue, et une paire de surfaces de friction (82) essentiellement verticales étant prévue pour venir en butée avec une tranche intermédiaire des raccords inférieurs de sorte que la quantité de balancement latéral permis pour les raccords inférieurs puisse être ajustée de façon précise pour permettre d'éliminer le balancement latéral si cela est souhaité pour une variété d'accessoires de tailles différentes.

12. Accouplement d'attelage AV selon la revendication 10 ou 11, également caractérisée par une béquille (46) prévue pour faciliter le réglage des éléments en saillie (38, 40) et des plaques à ouverture (42, 44) au niveau recherché pour permettre l'engrènement, des moyens de guidage (112, 114) étant prévus pour ajuster les éléments en saillie et les plaques à ouverture pour l'engagement automatique lors du mouvement en AV du tracteur.

Fig. 1

Fig. 2

Fig. 3

Fig. 5

Fig. 4